# EUROPÄISCHE PATENTSCHRIFT

(11) **EP 2 767 934 B1**
(45) Veröffentlichungstag und Bekanntmachung des Hinweises auf die Patenterteilung: **01.11.2017**
(21) Anmeldenummer: 14155397.4
(22) Anmeldetag: 17.02.2014
(51) Int. Cl.: H01Q 1/27, G06K 19/02, G06K 19/077, D06F 93/00, H01Q 9/04

(54) **Antennenmodul**
Antenna module
Module d'antenne

(30) Priorität: 15.02.2013 DE 202013100682 U
(43) Veröffentlichungstag der Anmeldung: 20.08.2014
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE); Maaß, Norman, 30455 Hannover (DE)
(74) Vertreter: Patentanwälte Thömen & Körner

(56) Entgegenhaltungen:
- WO-A1-03/050913
- US-A1- 2011 147 467

## Beschreibung

Die Erfindung betrifft ein Antennenmodul nach dem Oberbegriff des Anspruchs 1.

Aus der DE 10 2007 016 584 A1 ist ein Textilinformationsträger bekannt, der aus einem Antennenmodul und einem Chipmodul besteht. Das Antennenmodul umfasst einen Träger aus einer Textilware mit einem Antennenleiter. Das Chipmodul umfasst einen Chip mit einer Koppelschleife. Das Chipmodul ist auf dem Antennenmodul angeordnet und die Koppelschleife des Chipmoduls ist mit einer Koppelwindung des Antennenmoduls induktiv gekoppelt. Der Antennenleiter umfasst zwei Strahlerelemente, die sich ausgehend von der Koppelschleife zunächst von der Koppelschleife entfernen. Danach mäandern die weiteren Abschnitte des Antennenleiters.

Der Erfindung liegt die Aufgabe zu Grunde, ein Antennenmodul zu schaffen, das eine kompakte Bauform aufweist und dessen elektrische Eigenschaften eine hohe Sende- und Empfangsreichweite bei gleichzeitig geringer Beeinflussung der Resonanzfrequenz durch in der Nähe befindliche leitende Gegenstände ermöglichen.

Diese Aufgabe wird bei einem Antennenmodul nach dem Oberbegriff des Anspruchs 1 durch die Merkmale dieses Anspruchs gelöst.

Weiterbildungen und vorteilhafte Ausgestaltungen der Erfindung ergeben sich aus den Unteransprüchen.

Bei dem erfindungsgemäßen Antennenmodul stellt der Antennenleiter einen mechanisch verkürzten Dipol dar, der aber durch die Art der Leiterführung elektrisch so weit verlängert ist, dass er wieder in Resonanz mit der Betriebswellenlänge ist. Bei einem Dipol handelt es sich im Grundsatz um eine elektrische Antenne, bei der im Vergleich zu einer magnetischen Antenne die elektrische Komponente des elektromagnetischen Feldes im Nahfeld höher ist als die magnetische Komponente des elektromagnetischen Feldes. Der höhere Anteil der elektrischen Komponente des elektromagnetischen Feldes hat zur Folge, dass in der Nähe der Antenne befindliche leitende Gegenstände, die überwiegend ein elektrisches Feld aber weniger ein magnetisches Feld beeinflussen, die Antenne verstimmen können. Hierzu gehören auch Antennenmodule benachbarter Detektierplättchen, was das Vereinzeln der Detektierplättchen erschwert. Unter "Vereinzeln" wird hier verstanden, dass eine Vielzahl von einander benachbarten Detektierplättchen durch Anwendung eines Antikollisionsverfahrens gelesen werden können.

Bei einem gestreckten Dipol ist das Verhältnis der elektrischen Komponente zur magnetischen Komponente des elektromagnetischen Feldes am höchsten. Bei der erfindungsgemäßen Art der Leiterführung wird das Verhältnis der elektrischen Komponente zur magnetischen Komponente des elektromagnetischen Feldes mehr zu Gunsten der magnetischen Komponente verschoben. Dadurch verringern sich die Einflüsse von im Nahfeld befindlicher leitender Gegenstände. Entsprechend lassen sich eine Mehrzahl benachbarter Detektierplättchen leichter vereinzeln.

Gleichzeitig wird durch die Führung des Antennenleiters auch eine bei gestreckten Dipolen sonst auftretende ausgeprägte Richtwirkung der Antennen vermindert, d.h., dass die Antennen in der erfindungsgemäßen Ausgestaltung eine Rundstrahlcharakteristik erhalten. Im Übrigen bleibt aber die erhöhte Sende- und Empfangsreichweite der Antenne gegenüber einer reinen magnetischen Antenne, z. B. einer Spule weitgehend erhalten.

Dadurch, dass erfindungsgemäß die Enden der zweiten Abschnitte im Vergleich zu den anderen Bereichen der zweiten Abschnitte dichter aneinander liegen, nähert sich die Form der Antenne der Form eines geschlossenen Schwingkreises an. Die heißen Enden der Antenne, also die Orte, an denen Spannungsbäuche und Stromknoten auftreten, bilden dadurch intern eine höhere Kapazität als bei einem gestreckten Dipol aus, wodurch der Einfluss äußerer verstimmender Kapazitäten verringert wird.

Gemäß einer Weiterbildung können sich die dritten Abschnitte oder Teile davon, die unmittelbar oder erst in ihrem weiteren Verlauf im Winkel zu den zweiten Abschnitten abknicken, nach dem Abknicken in Gegenrichtung zu den zweiten Abschnitten verlaufen, wobei sich Bereiche der dritten Abschnitte wenigstens einmal unmittelbar an die zweiten Abschnitte annähern.

Diese Ausführung ermöglicht eine bessere Reproduzierbarkeit der Resonanzfrequenz der elektrischen Antenne bei textiler Festlegung des Antennenleiters auf dem Träger mittels Sticktechnik. Dabei wird der Antennenleiter zwar nur punktweise fixiert, trotzdem lassen sich in Bereichen bei und zwischen den Stickpunkten Toleranzen von 1/10 mm einhalten. Hingegen ist das mechanische Ende des Antennenleiters nicht festgelegt, insbesondere, wenn Träger als fortlaufendes Band hergestellt und im Rapport geschnitten werden. Indem sich Teile der dritten Abschnitte wenigstens einmal unmittelbar an die zweiten Abschnitte annähern, wird kapazitiv ein Kurzschluss zwischen dem Antennenleiter im dritten Abschnitt und im zweiten Abschnitt erzeugt. Das für die Bemessung der Resonanzfrequenz maßgebliche Ende ist dann das Ende des zweiten Abschnitts, an dem der Antennenleiter in den dritten Abschnitt umknickt. Hingegen ist die Lage des mechanischen Endes des Antennenleiters hinter dem kapazitiven Kurzschluss weitgehend irrelevant. Also auch, wenn das mechanische Ende über den letzten Stickpunkt unbefestigt hinausragt und dort eine undefinierte Lage einnimmt, verändert sich Resonanzfrequenz nicht.

Außerdem kann vorgesehen sein, dass Bereiche der zweiten und dritten Abschnitte vor der unmittelbaren Annäherung aneinander einen größeren Abstand aufweisen und eine Schlaufe bilden.

Diese Schlaufe stellt eine mechanische Verbreiterung des elektrisch wirksamen Endes der Antenne dar und bewirkt eine Erhöhung der Bandbreite. Eine Bandbreitenerhöhung kann erforderlich sein, wenn das Antennenmodul in unterschiedlichen Umgebungen mit mal mehr oder mal weniger leitenden Gegenständen, die eine Resonanzfrequenzverschiebung der Antenne bewirken können, eingesetzt werden soll.

Gemäß einer alternativen Ausführung können die dritten Abschnitte oder Teile davon andere Teile der dritten Abschnitte des jeweils anderen Strahlerelements oder sowohl andere Teile der dritten Abschnitte als auch zweite Abschnitte oder Teile davon des jeweils anderen Strahlerelements überlappen und wenigstens abschnittsweise unmittelbar aneinander grenzend parallel verlaufen.

Bei dieser Ausführung bilden die dicht aneinander liegenden Bereiche der dritten oder zweiten und dritten Abschnitte gegenseitig eine Kapazität, wodurch sich die Form der Antenne noch weiter der Form eines geschlossenen Schwingkreises annähert. Dadurch wird der Einfluss äußerer verstimmender Kapazitäten noch weiter verringert, als es schon bei der Ausführung mit den lediglich benachbarten Enden der Antenne der Fall ist.

Vorzugsweise weisen die unmittelbar aneinandergrenzenden Abschnitte eine Abstandstoleranz zwischen 0 und 1 mm auf.

Weiterhin liegen die Enden der dritten Abschnitte dichter an den Enden der ersten Abschnitte als die Enden der zweiten Abschnitte.

Gemäß einer Weiterbildung kann wenigstens einer der dritten Abschnitte einen mäanderförmigen Verlauf aufweisen.

Dadurch werden die Strahlerelemente unsymmetrisch und erhalten unterschiedliche Resonanzfrequenzen. Da durch den mäanderförmigen Verlauf aber nur ein Teil der Strahlerelemente verändert wird, während die anderen Teile unverändert bleiben, ergeben sich keine auseinanderliegenden diskreten Maxima in der Resonanzkurve, sondern ein breites Tableau. Die Folge ist somit eine Erhöhung der Bandbreite.

Vorzugsweise umschließt die Koppelspule des Antennenmoduls eine Koppelschleife eines Chipmoduls wenigstens einhalbmal.

Mit dem Umschließen der Koppelschleife des Chipmoduls über einhalbmal hinaus ergibt sich eine besonders feste Kopplung mit einem höheren Energieübertrag zwischen der Antenne und dem Chip und außerdem eine Verbreiterung der Resonanzkurve der Antenne.

Bei einem als fortlaufendes Band hergestellten und an Rapportstellen zerschnittenen Träger kann jeweils das letzte auf dem Träger festgelegte Ende des Antennenleiters parallel zu einer Schnittkante des Trägers oder von der Schnittkante des Trägers ins Innere des Trägers weisend ausgerichtet sein.

Durch die Art der Herstellung des Antennenmoduls entsteht ein freies Ende des Antennenleiters, das nicht mehr auf dem Träger festgelegt ist, sondern unbefestigt vorsteht. Verläuft das noch festgelegte Ende des Antennenleiters in Richtung zur Schnittkante, so gilt dies auch für das restliche, nicht festgelegte Ende. Dieses Ende kann mechanische Schäden beim Einbau eines mit dem Antennenmodul ausgestatteten Detektierplättchens in einem Anwendungsprodukt auslösen. Durch Ausrichten des letzten auf dem Träger festgelegten Endes des Antennenleiters parallel zu einer Schnittkante des Trägers oder von der Schnittkante des Trägers ins Innere des Trägers weisend wird auch das restliche, nicht festgelegte Ende in dieselbe Richtung gezwungen. Das freie Ende ist dadurch "entschärft".

Nachfolgend wird die Erfindung anhand eines Ausführungsbeispiels erläutert, dass in der Zeichnung dargestellt ist. Darin zeigen:
- Fig. 1: ein Antennenmodul mit beabstandeten Bereichen und
- Fig. 2: ein Antennenmodul mit überlappenden Bereichen.

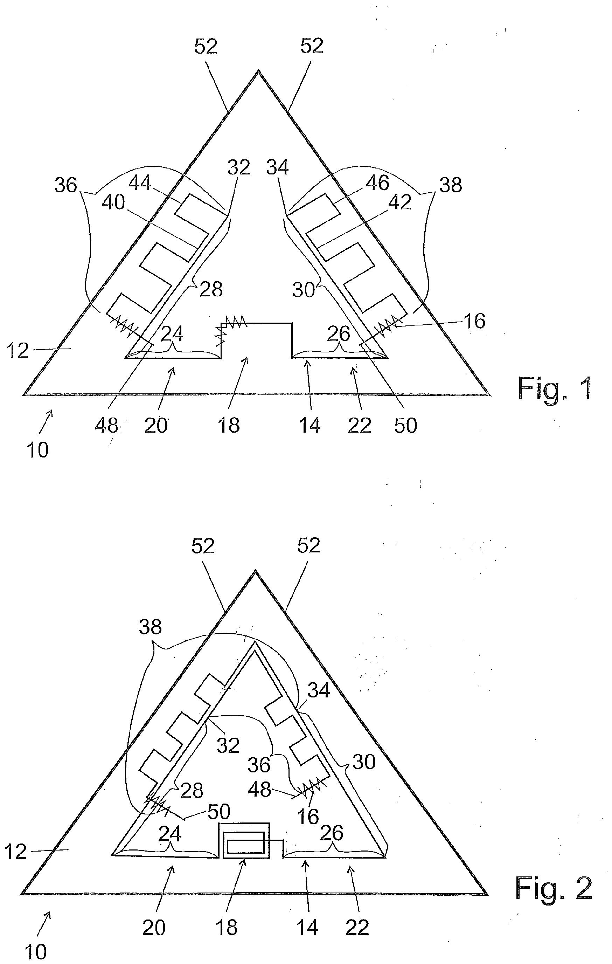

Fig. 1 zeigt ein Antennenmodul 10, das aus einem Träger 12 und einem Antennenleiter 14 besteht. Der Träger 12 kann ein Textilmaterial sein. Der Antennenleiter 14 ist ein isolierter Draht oder eine isolierte Litze. Bei einem Träger 12 aus Textilmaterial kann auch der Antennenleiter 14 aus einem oder mehreren textilen elektrisch leitenden Fäden oder aus der Kombination aus textilen elektrisch nicht leitenden und elektrisch leitenden Fäden bestehen. Der Antennenleiter 14 ist hier vollständig und durchgehend durch Sticktechnik mittels Stickgarn 16 auf dem Träger 12 fixiert. Aus Gründen der Übersichtlichkeit beschränkt sich die Darstellung der Stickbefestigung jedoch nur auf kurze Bereiche. Zur Bildung eines vollständigen Detektierplättchens muss noch ein Chipmodul bestehend aus einem Chip und einer Koppelschleife so auf dem Träger 12 angeordnet werden, dass die Koppelschleife induktiv mit einer Koppelspule 18 des Antennenleiters 14 gekoppelt ist. Aus Gründen der Übersichtlichkeit wurde hier aber kein Chipmodul dargestellt.

Der Antennenleiter 14 besteht aus zwei Strahlerelementen 20, 22, die mit der Koppelspule 18 verbunden sind. Die Antenne stellt einen Dipol dar. Jedes Strahlerelement 20, 22 des Dipols wird nachfolgend in drei Abschnitte unterteilt, um die unterschiedlichen Positionen des Verlaufs der Strahlerelemente 20, 22 zu beschreiben.

Von der Koppelspule 18 gehen erste Abschnitte 24, 26 aus und entfernen sich stetig von der Koppelspule 18. Am Ende der ersten Abschnitte 24, 26 schließen sich zweite Abschnitte 28, 30 der Strahlerelemente 20, 22 an, die einmal im Winkel zu den benachbarten ersten Abschnitten 24, 26 abknicken. Diese zweiten Abschnitte 28, 30 laufen aufeinander zu und enden an Orten 32, 34, die den geringsten gegenseitigen Abstand voneinander haben.

An die zweiten Abschnitte 28, 30 schließen sich dritte Abschnitte 36, 38 an, die im Winkel zu den benachbarten zweiten Abschnitten 28, 30 abknicken und in Gegenrichtung zu den zweiten Abschnitten 28, 30 verlaufen. Dabei nähern sich Teile 40, 42 der dritten Abschnitte 36, 38 wenigstens einmal unmittelbar an die zweiten Abschnitte 28, 30 an. Bereiche 44, 46 der zweiten Abschnitte 28, 30 und dritten Abschnitte 36, 38 besitzen vor der unmittelbaren Annäherung aneinander einen größeren Abstand und bilden eine Schlaufe. Die Enden 32, 34 der zweiten Abschnitte 28, 30 bilden gleichzeitig die elektrischen Enden der Strahlerelemente 20, 22 und bestimmen die Resonanzfrequenz. Die mechanischen Enden 48, 50 hingegen haben fast keinen Einfluss auf die Resonanzfrequenz, da vorher ein kapazitiver Kurzschluss zwischen Bereichen 40, 42 des zweiten Abschnittes 28, 30 und Teilen des dritten Abschnittes 36, 38 gebildet ist. Die Schlaufe entspricht einer Aufweitung der Enden der Strahlerelemente 20, 22 und führt zu einer Erhöhung der Bandbreite der Antenne.

Fig. 2 zeigt ein Antennenmodul 10 mit überlappenden Bereichen. Analog zu Fig. 1 besteht der Antennenleiter 14 ebenfalls aus zwei Strahlerelementen 20, 22, die mit der Koppelspule 18 verbunden sind. Die Koppelspule 18 selbst hat mehrere Windungen.

Von der Koppelspule 18 gehen erste Abschnitte 24, 26 aus und entfernen sich stetig von der Koppelspule 18. Am Ende der ersten Abschnitte 24, 26 schließen sich zweite Abschnitte 28, 30 der Strahlerelemente 20, 22 an, die einmal im Winkel zu den benachbarten ersten Abschnitten 24, 26 abknicken. Ebenso wie in Fig. 1 laufen die zweiten Abschnitte 28, 30 aufeinander zu und enden an Orten 32, 34, die den geringsten gegenseitigen Abstand voneinander haben. Hier endet jedoch die Übereinstimmung mit Fig. 1.

An die zweiten Abschnitte 28, 30 schließen sich dritte Abschnitte 36, 38 an, die sich hier zunächst in Richtung der benachbarten zweiten Abschnitte 28, 30 fortsetzen und anschließend dritte Abschnitte 38, 36 oder dritte 38, 36 und zweite Abschnitte 30, 28 des jeweils anderen Strahlerelements 22, 20 überlappen und wenigstens abschnittsweise unmittelbar aneinander grenzend parallel verlaufen. Dabei weisen die dritten Abschnitte 36, 38 teilweise einen mäanderförmigen Verlauf auf.

Die Größe des Trägers 12 des Antennenmoduls 10 für den Antennenleiter 14 ist so bemessen, dass der Antennenleiter 14 dort sicher befestigt werden kann. Wenn dies durch Sticktechnik erfolgt, muss ein Abstand zum äußeren Rand 52 des Trägers 12 eingehalten werden, damit das Stickgarn 16 sicher Halt findet. Die Festlegung des Antennenleiters 14 durch Stickgarn 16 beschränkt sich auf die Kontur des Antennenleiters 14, die die elektrischen Eigenschaften sicherstellt. Wird das Antennenmodul 10 bei der Herstellung als durchgehendes Band an Rapportstellen geschnitten, liegen die Enden 48, 50 des Antennenleiters 14, der als durchgehender Leiter verarbeitet wurde, frei. Um eine gegen Beschädigungsgefahr sichere Lage des nicht festgelegten Endes 48, 50 des Antennenleiters 14 zu erreichen, ist das letzte auf dem Träger 12 festgelegte Ende des Antennenleiters 14 parallel zu einer Schnittkante 52 des Trägers 12 oder von der Schnittkante 52 des Trägers ins Innere des Trägers 12 weisend ausgerichtet. Dadurch wird auch das äußere, nicht mehr festgelegte Ende 48, 50 in dieselbe Richtung gezwungen, wie das festgelegte Ende, und kann so keine nach außen gerichteten Zerstörungen anrichten.

**Bezugszeichenliste**

| | | | |
|---|---|---|---|
| 10 | Antennenmodul | 50 | mechanisches Ende |
| 12 | Träger | 52 | Rand/Schnittkante |
| 14 | Antennenleiter | | |
| 16 | Stickgarn | | |
| 18 | Koppelspule | | |
| 20 | Strahlerelement | | |
| 22 | Strahlerelement | | |
| 24 | erster Abschnitt | | |
| 26 | erster Abschnitt | | |
| 28 | zweiter Abschnitt | | |
| 30 | zweiter Abschnitt | | |
| 32 | Ort | | |
| 34 | Ort | | |
| 36 | dritter Abschnitt | | |
| 38 | dritter Abschnitt | | |
| 40 | Bereich | | |
| 42 | Bereich | | |
| 44 | Bereich | | |
| 46 | Bereich | | |
| 48 | mechanisches Ende | | |

## Patentansprüche

1. Antennenmodul (10), bestehend aus einem Träger (12) und einem darauf angeordneten Antennenleiter (14), der aus zwei abzweigenden Strahlerelementen (20, 22) aus jeweils mehreren Abschnitten besteht, wobei sich erste Abschnitte (24, 26) zunächst stetig entfernen, dass anschließend an Enden der ersten Abschnitte (24, 26) zweite Abschnitte (28, 30) der Strahlerelemente (20, 22) folgen, die wenigstens einmal im Winkel zu den benachbarten ersten Abschnitten (24, 26) abknicken und wenigstens Teile dieser zweiten Abschnitte (28, 30) aufeinander zu laufen und sich aneinander annähern und die zweiten Abschnitte (28, 30) an Orten (32, 34) enden, die einen geringeren gegenseitigen Abstand als die Enden der ersten Abschnitte (24, 26) voneinander haben und dass an die zweiten Abschnitte (28, 30) dritte Abschnitte (36, 38) anschließen, die unmittelbar an den Enden der zweiten Abschnitte (28, 30) gegenüber den zweiten Abschnitten (28, 30) abknicken oder Teile der dritten Abschnitte (36, 38) im weiteren Verlauf der dritten Abschnitte (36, 38) abknicken, **dadurch gekennzeichnet, dass** der Antennenleiter (14) ferner aus einer Koppelspule (18) besteht, dass die zwei abzweigenden Strahlerelemente (20,22) von der Koppelspule (18) abzweigen, dass sich erste Abschnitte (24, 26) ausgehend von der Koppelspule (18) zunächst von dieser stetig entfernen, dass die dritten Abschnitte (36, 38) oder Teile davon, die unmittelbar oder erst in ihrem weiteren Verlauf im Winkel zu den zweiten Abschnitten (28, 30) abknicken, nach dem Abknicken in Gegenrichtung zu den zweiten Abschnitten (28, 30) verlaufen, wobei sich Bereiche (40, 42) der dritten Abschnitte (36, 38) wenigstens einmal unmittelbar an die zweiten Abschnitte (28, 30) annähern und dass Bereiche (44, 46) der zweiten (28, 30) und dritten Abschnitte (36, 38) vor der unmittelbaren Annäherung aneinander einen größeren Abstand als bei der unmittelbaren Annäherung aufweisen und eine Schlaufe bilden, wobei die unmittelbare Annäherung ein kapazitiver Kurzschluss ist und wobei unter drei elektromagnetischen Eigenschaften der Antenne eine Potentialdifferenz maßgeblich durch die ersten Abschnitte, ein magnetischer Anteil maßgeblich durch die zweiten Abschnitte und eine Breitbandigkeit maßgeblich durch die dritten Abschnitte beeinflusst und bestimmt ist.

2. Antennenmodul (10), bestehend aus einem Träger (12) und einem darauf angeordneten Antennenleiter (14), der aus zwei abzweigenden Strahlerelementen (20, 22) aus jeweils mehreren Abschnitten besteht, wobei sich erste Abschnitte (24, 26) zunächst stetig entfernen, dass anschließend an Enden der ersten Abschnitte (24, 26) zweite Abschnitte (28, 30) der Strahlerelemente (20, 22) folgen, die wenigstens einmal im Winkel zu den benachbarten ersten Abschnitten (24, 26) abknicken und wenigstens Teile dieser zweiten Abschnitte (28, 30) aufeinander zu laufen und sich aneinander annähern und die zweiten Abschnitte (28, 30) an Orten (32, 34) enden, die einen geringeren gegenseitigen Abstand als die Enden der ersten Abschnitte (24, 26) voneinander haben und dass an die zweiten Abschnitte (28, 30) dritte Abschnitte (36, 38) anschließen, die unmittelbar an den Enden der zweiten Abschnitte (28, 30) gegenüber den zweiten Abschnitten (28, 30) abknicken oder Teile der dritten Abschnitte (36, 38) im weiteren Verlauf der dritten Abschnitte (36, 38) abknicken, **dadurch gekennzeichnet, dass** der Antennenleiter (14) ferner aus einer Koppelspule (18) besteht, dass die zwei abzweigenden Strahlerelemente (20,22) von der Koppelspule (18) abzweigen, dass sich erste Abschnitte (24, 26) ausgehend von der Koppelspule (18) zunächst von dieser stetig entfernen und dass die dritten Abschnitte (36, 38) oder Teile davon andere Teile der dritten Abschnitte (38, 36) des jeweils anderen Strahlerelements (22, 20) oder sowohl andere Teile der dritten Abschnitte (38, 36) als auch zweite Abschnitte (30, 28) oder Teile davon des jeweils anderen Strahlerelements (22, 20) überlappen und wenigstens abschnittsweise unmittelbar aneinander grenzend parallel verlaufen, wobei die unmittelbare Annäherung ein kapazitiver Kurzschluss ist und wobei unter drei elektromagnetischen Eigenschaften der Antenne eine Potentialdifferenz maßgeblich durch die ersten Abschnitte, ein magnetischer Anteil maßgeblich durch die zweiten Abschnitte und eine Breitbandigkeit maßgeblich durch die dritten Abschnitte beeinflusst und bestimmt ist.

3. Antennenmodul nach Anspruch 2, **dadurch gekennzeichnet, dass** die unmittelbar aneinandergrenzenden Abschnitte (28, 30; 36, 38) eine Abstandstoleranz zwischen 0 und 1 mm aufweisen.

4. Antennenmodul nach einem der Ansprüche 1 bis 4, **dadurch gekennzeichnet, dass** die Enden der dritten Abschnitte (36, 38) dichter an den Enden der ersten Abschnitte (24, 26) liegen als die Enden der zweiten Abschnitte (28, 30).

5. Antennenmodul nach Anspruch 2, **dadurch gekennzeichnet, dass** wenigstens einer der dritten Abschnitte (36, 38) teilweise einen mäanderförmigen Verlauf aufweist.

6. Antennenmodul nach einem der Ansprüche 1 bis 5, **dadurch gekennzeichnet, dass** die Koppelspule (18) des Antennenmoduls (10) eine Koppelschleife eines Chipmoduls wenigstens einhalbmal einfaßt.

7. Antennenmodul nach einem der Ansprüche 1 bis 6, **dadurch gekennzeichnet, dass** die Koppelspule (18) des Antennenmoduls (10) eine Koppelschleife eines Chipmoduls mehr als einmal umschließt.

8. Antennenmodul nach einem der Ansprüche 1 bis 7, **dadurch gekennzeichnet, dass** jeweils das letzte auf dem Träger festgelegte Ende des Antennenleiters (14) parallel zu einer Schnittkante (52) eines Trägers (12) oder von der Schnittkante (52) des Trägers (12) ins Innere des Trägers (12) weisend ausgerichtet ist, wodurch das äußere, nicht mehr festgelegte Ende (48, 50) in dieselbe Richtung gezwungen ist, wie das festgelegte Ende, und nach außen gerichteten Zerstörungen durch das nicht mehr festgelegte Ende (48, 50) ausgeschlossen sind.

## Claims

1. An antenna module (10) consisting of a carrier (12) and an antenna conductor (14) which is arranged thereon and which consists of two emitter elements (20, 22) which diverge and which each consist of several sections, wherein first sections (24, 26) firstly grow continuously more remote that subsequently second sections (28, 30) of the emitter elements (20, 22) follow at ends of the first sections (24, 26), which second sections (28, 30) bend, at least once, at an angle to the adjacent first sections (24, 26) and at least parts of these second sections (28, 30) run toward one another and grow close to one another and the second sections (28, 30) end at locations (32, 34) which have a smaller mutual spacing than the ends of the first sections (24, 26) from one another, and that third sections (36, 38) are connected to the second sections (28, 30), which third sections (36, 38) bend directly at the ends of the second sections (28, 30) relative to the second sections (28, 30) or parts of the third sections (36, 38) bend in the further course of the third sections (36, 38), **characterised in that** the antenna conductor (14) further consists of a coupling coil (18), **in that** the two diverging emitter elements (20, 22) diverge from the coupling coil (18), **in that** first sections (24, 26), starting from the coupling coil (18), firstly grow continuously more remote therefrom, **in that** the third sections (36, 38), or parts thereof, which bend directly or only in their further course at an angle to the second sections (28, 30), run in the opposite direction to the second sections (28, 30) after bending, wherein regions (40, 42) of the third sections (36, 38) grow directly close to the second sections (28, 30) at least once, and **in that** regions (44, 46) of the second (28, 30) and third sections (36, 38), before directly growing close to one another, have a greater spacing than when directly growing closer and form a loop, wherein the direct approaching is a capacitive short-circuit and wherein, of three electromagnetic properties of the antenna, a potential difference is influenced and determined primarily by the first sections, a magnetic portion is influenced and determined primarily by the second sections, and a broadband capacity is influenced and determined primarily by the third sections.

2. The antenna module (10) consisting of a carrier (12) and an antenna conductor (14) which is arranged thereon and which consists of two emitter elements (20, 22) which diverge and which each consist of several sections, wherein first sections (24, 26) firstly grow continuously more remote that subsequently second sections (28, 30) of the emitter elements (20, 22) follow at ends of the first sections (24, 26), which second sections (28, 30) bend, at least once, at an angle to the adjacent first sections (24, 26) and at least parts of these second sections (28, 30) run toward one another and grow close to one another and the second sections (28, 30) end at locations (32, 34) which have a smaller mutual spacing than the ends of the first sections (24, 26) from one another, and that third sections (36, 38) are connected to the second sections (28, 30), which third sections (36, 38) bend directly at the ends of the second sections (28, 30) relative to the second sections (28, 30) or parts of the third sections (36, 38) bend in the further course of the third sections (36, 38), **characterised in that** the antenna conductor (14) further consists of a coupling coil (18), **in that** the two diverging emitter elements (20, 22) diverge from the coupling coil (18), **in that** first sections (24, 26), starting from the coupling coil (18), firstly grow continuously more remote therefrom, and **in that** the third sections (36, 38), or parts thereof, overlap other parts of the third sections (38, 36) of the respective other emitter element (22, 20) or both other parts of the third sections (38, 36) and second sections (30, 28), or parts thereof, of the respective other emitter element (22, 20) and run, at least in sections, parallel and are directly adjacent, wherein the direct approaching is a capacitive short-circuit and wherein, of three electromagnetic properties of the antenna, a potential difference is influenced and determined primarily by the first sections, a magnetic portion is influenced and determined primarily by the second sections, and a broadband capacity is influenced and determined primarily by the third sections.

3. The antenna module according to Claim 2, **characterised in that** the directly adjacent sections (28, 30; 36, 38) have a spacing tolerance between 0 and 1 mm.

4. The antenna module according to any one of Claims 1 to 4, **characterised in that** the ends of the third sections (36, 38) are closer to the ends of the first sections (24, 26) than the ends of the second sections (28, 30).

5. The antenna module according to Claim 2, **characterised in that** at least one of the third sections (36, 38) partially has a meandering course.

6. The antenna module according to any one of Claims 1 to 5, **characterised in that** the coupling coil (18) of the antenna module (10) at least half surrounds a coupling loop of a chip module.

7. The antenna module according to any one of Claims 1 to 6, **characterised in that** the coupling coil (18) of the antenna module (10) encloses a coupling loop of a chip module more than once.

8. The antenna module according to any one of Claims 1 to 7, **characterised in that** the last end of the antenna conductor (14), which is fixed on the carrier, is orientated parallel to a cutting edge (52) of a carrier (12) or pointing into the interior of the carrier (12) from the cutting edge (52) of the carrier (12), whereby the outer end (48, 50), which is no longer fixed, is forced in the same direction as the fixed end, and outwardly directed damage by the end (48, 50) which is no longer fixed is ruled out.

## Revendications

1. Module d'antenne (10) composé d'un support (12) et d'un conducteur d'antenne (14) disposé sur celui-ci, le conducteur d'antenne étant composé de deux éléments rayonnants (20, 22) comportant respectivement plusieurs sections, des premières sections (24, 26) s'éloignant tout d'abord de façon constante, premières sections, auxquelles suivent des secondes sections (28, 30) des éléments rayonnants (20, 22), les secondes sections étant adjacentes à des extrémités des premières sections (24, 26) et pliées au moins une fois de manière à former un angle avec les premières sections voisines (24, 26), et au moins des parties de ces secondes sections (28, 30) se dirigent les unes vers les autres et se rapprochent les unes des autres et les secondes sections (28, 30) se terminent à des endroits (32, 34) présentant un écart mutuel inférieur à celui entre les extrémités des premières sections (24, 26) et aux secondes sections (28, 30) sont adjacentes des troisièmes sections (36, 38), qui sont pliées immédiatement aux extrémités des secondes sections (28, 30), en face de celles-ci, ou des parties des troisièmes sections (36, 38) sont pliées à un endroit de l'extension restante des troisièmes sections (36, 38), **caractérisé en ce que** le conducteur d'antenne (14) est composé, en outre, d'une bobine de couplage (18), que les deux éléments rayonnants dérivants (20, 22) sont dérivés de la bobine de couplage (18), qu'à partir de la bobine de couplage (18) des premières sections (24, 26) s'éloignent de celle-ci tout d'abord de manière constante, que les troisièmes sections (36, 38) ou des parties de celles-ci, qui sont pliées immédiatement ou seulement à un endroit de leur extension restante de manière à former un angle avec les secondes sections (28, 30), s'étendent, après le pliage, dans le sens inverse aux secondes sections (28, 30), des zones (40, 42) des troisièmes sections (36, 38) se rapprochant au moins une fois immédiatement des secondes sections (28, 30) et que des zones (44, 46) des secondes sections (28, 30) et des troisièmes sections (36, 38) présentent, préalablement au rapprochement immédiat les unes des autres, un écart supérieur à celui lors du rapprochement immédiat et forment une boucle, le rapprochement immédiat étant un court-circuit capacitif et parmi trois propriétés électromagnétiques de l'antenne, une différence de potentiel étant considérablement influencée et déterminée par les premières sections, une proportion magnétique étant grandement influencée et déterminée par les secondes sections et une bande large étant en grande partie influencée et déterminée par les troisièmes sections.

2. Module d'antenne (10) composé d'un support (12) et d'un conducteur d'antenne (14) disposé sur celui-ci, le conducteur d'antenne étant composé de deux éléments rayonnants (20, 22) comportant respectivement plusieurs sections, des premières sections (24, 26) s'éloignant tout d'abord de façon constante, premières sections, auxquelles suivent des secondes sections (28, 30) des éléments rayonnants (20, 22), les secondes sections étant adjacentes à des extrémités des premières sections (24, 26) et pliées au moins une fois de manière à former un angle avec les premières sections voisines (24, 26) et au moins des parties de ces secondes sections (28, 30) se dirigent les unes vers les autres et se rapprochent les unes des autres et les secondes sections (28, 30) se terminent à des endroits (32, 34) présentant un écart mutuel inférieur à celui entre les extrémités des premières sections (24, 26) et aux secondes sections (28, 30) sont adjacentes des troisièmes sections (36, 38) qui sont pliées immédiatement aux extrémités des secondes sections (28, 30), en face de celles-ci, ou des parties des troisièmes sections (36, 38) sont pliées à un endroit de l'extension restante des troisièmes sections (36, 38), **caractérisé en ce que** le conducteur d'antenne (14) est composé, en outre, d'une bobine de couplage (18), que les deux éléments rayonnants dérivants (20, 22) sont dérivés de la bobine de couplage (18), qu'à partir de la bobine de couplage (18) des premières sections (24, 26) s'éloignent de celle-ci tout d'abord de manière constante, que les troisièmes sections (36, 38) ou des parties de celles-ci chevauchent d'autres parties des troisièmes sections (38, 36) de l'autre des éléments rayonnants (22, 20) ou non seulement d'autres parties des troisièmes sections (38, 36) mais encore des secondes sections (30, 28) ou des parties de celles-ci de l'autre élément rayonnant (22, 20) et s'étendent de façon parallèle, immédiatement adjacentes les unes aux autres, au moins par sections, l'approchement immédiat étant un court-circuit capacitif et parmi trois propriétés électromagnétiques de l'antenne, une différence de potentiel étant considérablement influencée et déterminée par les premières sections, une proportion magnétique étant grandement influencée et déterminée par les secondes sections et une bande large étant en grande partie influencée et déterminée par les troisièmes sections.

3. Module d'antenne suivant la revendication 2, **caractérisé en ce que** les sections immédiatement adjacentes (28, 30 ; 36, 38) présentent des tolérances d'écart comprises entre 0 et 1 mm.

4. Module d'antenne suivant une des revendications 1 à 4, **caractérisé en ce que** les extrémités des troisièmes sections (36, 38) sont situées plus près des extrémités des premières sections (24, 26) que les extrémités des secondes sections (28, 30).

5. Module d'antenne suivant la revendication 2, **caractérisé en ce qu'**au moins une des troisièmes sections (36, 38) présente partiellement une extension sinueuse.

6. Module d'antenne suivant une des revendications 1 à 5, **caractérisé en ce que** la bobine de couplage (18) du module d'antenne (10) enferme au moins une demi fois une boucle de couplage d'un module à puce.

7. Module d'antenne suivant une des revendications 1 à 6, **caractérisé en ce que** la bobine de couplage (18) du module d'antenne (10) enferme plus d'une fois une boucle de couplage d'un module à puce.

8. Module d'antenne suivant une des revendications 1 à 7, **caractérisé en ce que** respectivement la dernière extrémité du conducteur d'antenne (14) fixée sur le support est orientée de façon parallèle à un bord coupé (52) d'un support (12) ou de façon à se diriger depuis le bord coupé (52) vers l'intérieur du support (12), ce qui force l'extrémité extérieure (48, 50), qui n'est plus fixée, à s'étendre dans la même direction que l'extrémité fixée, de manière que des destructions dirigées vers l'extérieur soient exclues grâce à l'extrémité (48, 50) qui n'est plus fixée.
